# EUROPEAN PATENT APPLICATION

(11) **EP 1 462 275 A1**
(43) Date of publication of application: **29.09.2004**
(21) Application number: 04007123.5
(22) Date of filing: 24.03.2004
(51) Int. Cl.: B60B 7/00

(54) **Noise reducer for vehicle wheel**

(30) Priority: 28.03.2003 JP 2003091707
(71) Applicant: SUMITOMO RUBBER INDUSTRIES LIMITED, Kobe-shi, Hyogo-ken (JP)
(72) Inventor: Hasegawa, Hirotsugu C/o Sumitomo Rubber Ind., Ltd, Chuo-ku Kobe-shi Hyogo-ken (JP)
(74) Representative: Manitz, Finsterwald & Partner GbR

(57) **Abstract**

A noise reducer (1) mounted on the outside of a vehicle wheel (W) utilizing hub bolts (7) is disclosed. The noise reducer (1) comprises a pressure plate (2) and a vibration damper (3), wherein the pressure plate (2) is provided with mounting holes (2a) and mounted on the outside of the wheel (W), and the vibration damper (3) is disposed in a periphery zone of the pressure plate (2) so that the vibration damper (3) presses a disk portion (4b) of the wheel (W) when the pressure plate (2) is mounted.

## Description

The present invention relates to a noise reducer for a vehicle wheel capable of reducing road noise.

According to the recent trend toward luxury automobiles, there is a strong demand for a quiet car interior even under high speed running conditions.

A running noise which is often heard inside the car when running on relatively rough paved road surfaces and whose sound spectrum has a peak in a 125 Hz band or 250 Hz band, namely, around about 200 Hz is called road noise - a relatively low continuous sound like "GO".
This type of noise is caused due to roughness of road surface. The tire tread portion (especially, steel belt) is vibrated during running, and through the wheel, axle, suspension mechanism and the like, the vibration is transmitted to the vehicle body and emits road noise.
Road noise may be reduced by changing (1) the tread rubber compound, structure and the like of the tire, and (2) the suspension mechanism, sound insulation structure of the passenger room and the like of the vehicle, and further (3) the structure of the wheel.

These measures are however, of course not applicable to the existing tires, wheels and vehicles.

It is therefore, an object of the present invention to provide a noise reducer which can reduce road noise even in combination with an existing wheel.

According to one aspect of the present invention, a noise reducer comprises a pressure plate mounted on the outside of the wheel utilizing hub bolts, and a vibration damper disposed in a periphery zone of the pressure plate so that the vibration damper presses a disk portion of the wheel when the pressure plate is mounted.

Therefore, the vibration damper can control vibrations causing on the wheel during running, and the noise reducer can reduce road noise easily and inexpensively.

An embodiment of the present invention will now be described in detail in conjunction with the accompanying drawings.
Fig.1 is a cross sectional view of a noise reducer according to the present invention which is mounted on a hub together with a wheel.
Fig.2 is a perspective view of the noise reducer.

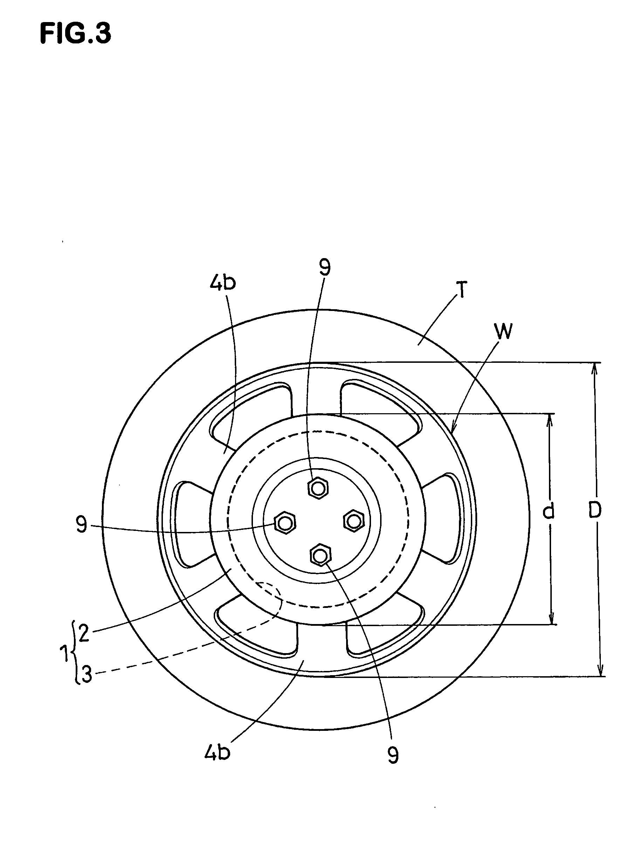

Fig.3 is an outside view of an assembly of the noise reducer, wheel and tire.
Fig.4 is a cross sectional view showing a hub bolt and nuts for explaining another way of securing the noise reducer.
Fig.5 is a cross sectional view showing another example of the noise reducer and a combination use of the noise reducer with a spacer.
Fig.6 is an outside view of an assembly of the tire and wheel.

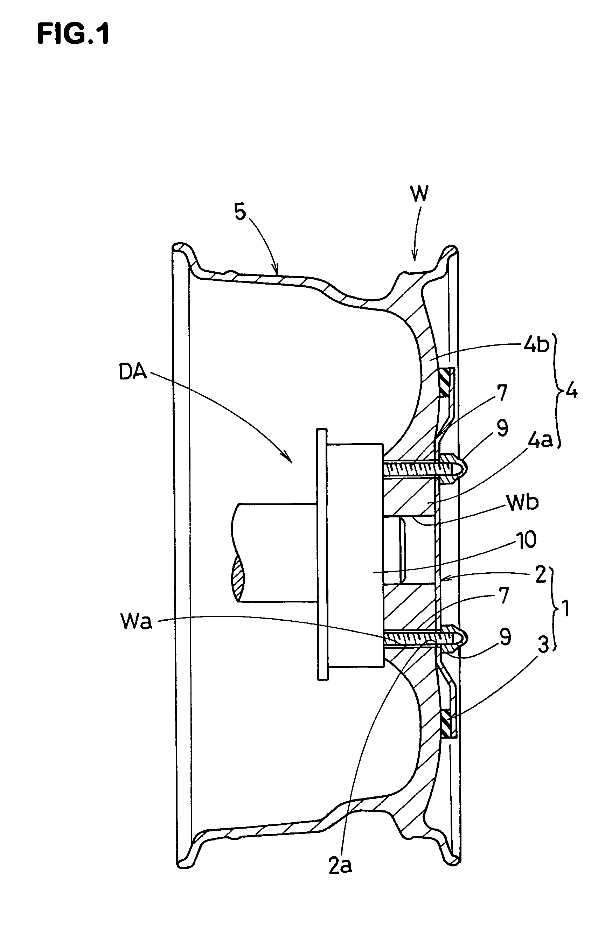

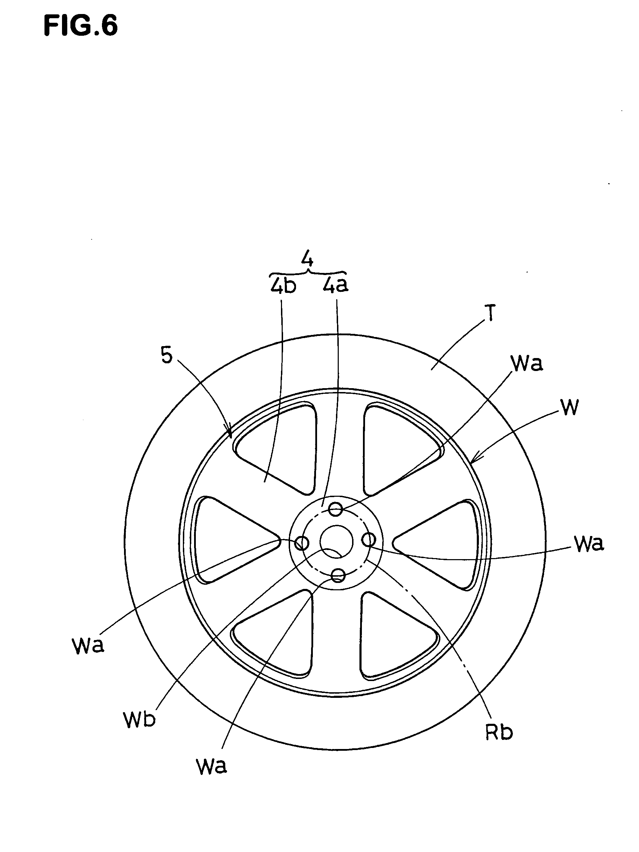

According to the present invention, a noise reducer 1 can be designed to use with existing wheels w. Generally, for example as shown in Figs.1 and 6, a wheel w comprises a rim portion 5 on which a tire T is mounted, a hub portion 4a attached to a hub 10 of a vehicle's axle DA, and a disk portion 4b extending radially outwardly from the hub portion 4a to the rim portion 5. Here, the disk portion 4b meant for not only a disk-like relatively thin part but also radius rods or spokes. The hub portion 4a is provided with a central hub hole or center bore wb for the hub center and a plurality of bolt holes wa therearound. The bolt holes wa are arranged in the same pattern as the bolts 7 of the hub 10. Therefore, as the hub bolts 7 are usually arranged on the so called bolt circle at regular pitches, the bolt holes wa are also arranged at regular pitches on a circle having the same diameter as the bolt circle diameter.
Of course it is possible to use the noise reducer 1 in combination with a newly designed wheel or special vehicle wheel as far as it has an annular ground contacting portion, the hub portion 4a and the disk portion 4b.

In the following embodiments, used is a one-piece light alloy wheel w which is composed of a rim portion 5, a hub portion 4a and radius rods 4b. As the bolt pattern of the hub 10 is 4-lug pattern, the hub portion 4a is provided with four bolt holes Wa. The tire T is a pneumatic tire which comprises, as well known in the art, a tread portion, a pair of sidewall portions and a pair of bead portions seating on bead seats of the rim. But, it is not always necessary that the tire is pneumatic.

using the hub bolts 7, the noise reducer 1 is attached on to the outside of the wheel W.

The noise reducer 1 comprises a vibration damper 3 and a pressure plate 2 therefor.

In this embodiment, the pressure plate 2 is a disk made of a rigid material such as metal materials and fiber reinforced plastics. Although the thickness of the pressure plate 2 depends on the material used, it is preferably set in the range of not less than 1 mm, more preferably more than 3 mm, but not more than 10 mm, more preferably less than 7 mm. For example, a metal material having a thickness of about 5 mm is used.

A circular central portion of the pressure plate 2 forms a mounting portion. The mounting portion is provided with through holes 2a for mounting (hereinafter the "mounting hole 2a"). The mounting hole 2a are formed around the center of the pressure plate 2 in the same pattern as the bolt holes wa of the wheel thus the hub bolts 7. Namely, the mounting hole 2a are arranged at regular pitches on a circle Ra having the same diameter as the pitch center circle Rb of the bolt holes wa of the wheel or the above-mentioned bolt circle diameter.

The above-mentioned vibration damper 3 is fastened on to the peripheral zone of the inside surface (A) of the pressure plate 2, for example using adhesive agent or the like.

The vibration damper 3 is made of a material which can damp vibrations of the disk portion 4b. As far as the vibrations can be damped or absorbed thereby, various materials may be used, but materials whose hysteresis loss and/or internal friction are large are preferred. For example, rubber (inc. solid rubber and expanded or foamed rubber); foamed plastic (e.g. urethane foam, expanded polystyrene); nonwoven fabric (e.g. felt); asphalt sheet (preferably reinforced with fibers or fabric) and the like may be used.

In this example, the vibration damper 3 is annular and extends continuously along the circular edge 2e of the pressure plate 2.

For the purpose of weight reduction, however, the vibration damper 3 may be formed discontinuously only at the corresponding positions to the radius rods.

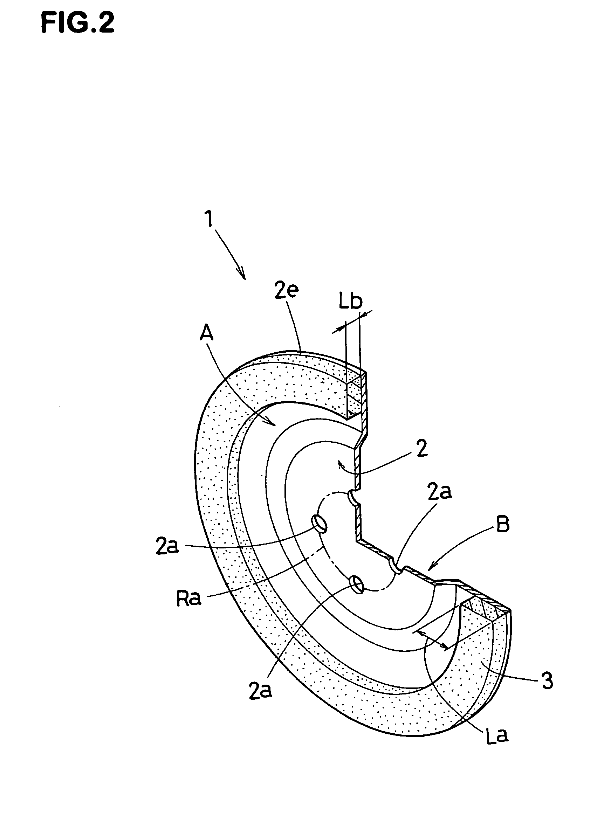

In the example shown in Fig.2, the cross sectional shape of the vibration damper 3 is rectangular and constant in the circumferential direction. But it is also possible to contour the vibration damper 3 to fit the disk portion, namely, the shape may be changed in the circumferential direction, or radial direction, or both.

As for the thickness Lb (axle direction) and width La (radial direction) of the vibration damper 3, the width La is preferably not less than 10 mm, more preferably more than 20 mm, but not more than 50 mm, on condition that the entire width contacts with the disk portion 4b, and the thickness Lb is not less than 1 mm, preferably more than 5 mm, but not more than 20 mm preferably less than 15 mm. In other words, it is desirable that these limitations are satisfied by the contacting part.
If the width La is less than 10 mm and/or the thickness is less than 1 mm, then it is difficult to damp the vibrations. If the width La is more than 50 mm and/or the thickness Lb is more than 10 mm, then dynamic performance, fuel consumption and the like are liable to deteriorate.

The simplest way of mounting the noise reducer 1 is shown in Fig.1. In this case, the wheel w is first installed on the hub 10 as usual, but at that time, hub nuts are not yet attached. Then, the noise reducer 1 is installed on the outside of the wheel w so that the bolts 7 protrude from the outer surface of the mounting portion of the pressure plate 2 through the mounting holes 2a. At the bolts ends, hub nuts (cap nut) 9 are attached. In this case, as a large force is applied when the nuts are screwed up, at least the mounting portion should be a strong metal material.

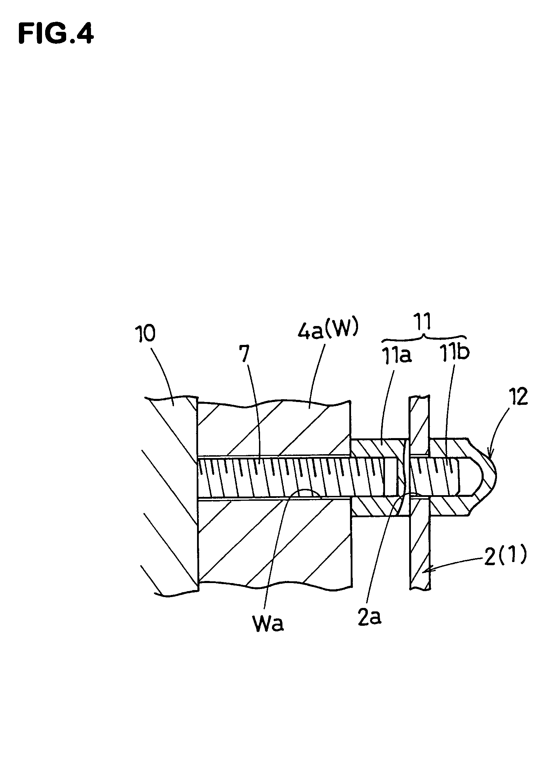

Fig.4 shows another way of mounting the noise reducer 1. This is preferably employed when the protruding portion of the bolt 7 is short. In this case, the wheel w is first installed on the hub 10 as usual and special nuts 11 are attached instead of usual nuts and tightened. The special nut 11 is made up of a main portion 11a like a cap nut and a bolt portion 11b protruding from the cap concentrically. Then, the noise reducer 1 is installed on the outside of the wheel w so that the bolt portions 11b protrude from the outer surface of the mounting portion of the pressure plate 2 through the mounting holes 2a. At the ends of the bolt portions 11b, nuts (cap nut) 12 are attached. In this case, in contrast to the former example, even in the mounting portion, a nonmetal material may be used. By preparing a plurality of special nuts 11 whose main portions 11a have different lengths, the axial position (thereby the pressure) of the noise reducer may be easily adjusted, and the applicability to the existing wheels is widened.

In any case, the noise reducer 1 is mounted on the outside of the wheel w, using the hub bolts 7 and nuts 9, 11, 12.

When the noise reducer 1 is mounted on the outside of the wheel w, it is necessary that the vibration damper 3 is pressed on to the disk portion 4 by the pressure plate 2. In order to effectively damp vibrations of the disk portion 4, the radial position of the vibration damper 3 is preferably determined such that the vibration damper 3 presses at least a middle part of the disk portion 4b, for example ranging from about 40 % to about 80 % of the course from the hub portion 4a to the rim portion 5.
In this light, the diameter (d) of the circular pressure plate 2 is preferably set in the range of not less than 200 mm, and not more than the wheel rim diameter D minus 50 mm (namely 200 mm =< d =< D-50 mm) in case of passenger car sizes. If the diameter (d) is outside the range, it becomes difficult to reduce road noise.

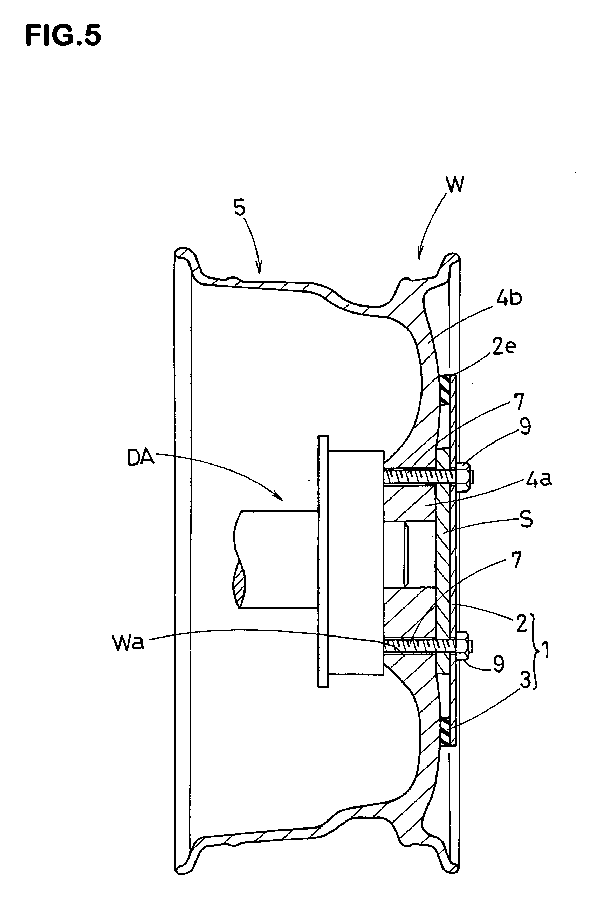

In the example shown in Figs.1 and 2, the central circular mounting portion is dished towards the inside. But it is also possible to form the entirety of the pressure plate 2 as being flat as shown in Fig.5. Further, it is possible to use a spacer (S) between the mounting portion and the wheel w to adjust the axial position. By preparing, a plurality spacers having different thickness, the axial position, thereby the pressure, may be easily adjusted.

### Comparison Tests

Using a Japanese 2000 cc FF passenger car provided on all the four wheels with noise reducers (tire size: 195/65R15 91H, wheel rim size: 15x6JJ, tire pressure: 200 kPa), the road noise was measured at the driver's position in the passenger room during coasting on a relatively rough dry asphalt road surface at a speed of 60 km/hr to obtain the peak sound pressure at 250 Hz. The test results are shown in Table 1, wherein the sound pressure is indicated in decibel based on Ref. being zero decibel.

From the test results, it was confirmed that the noise reducer can reduce road noise effectively. Further, it was also confirmed through the test driver's feeling that the dynamic performance such as steering stability is not deteriorated by the addition of the noise reducers.

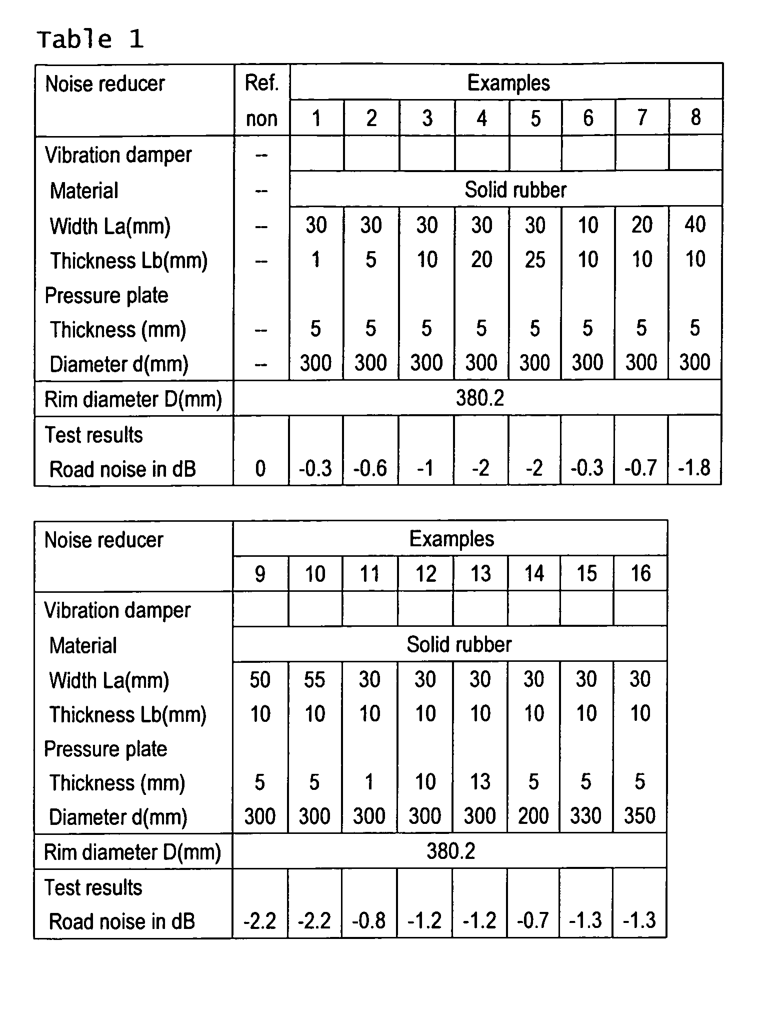

## Claims

1. A noise reducer for a vehicle wheel comprising
a pressure plate mounted on the outside of the wheel utilizing hub bolts, and
a vibration damper disposed in a periphery zone of the pressure plate so that the vibration damper presses a disk portion of the wheel when the pressure plate is mounted.

2. The noise reducer according to claim 1, wherein
the vibration damper is annular and has a radial width in a range of from 10 to 50 mm and a thickness in a range of from 1 to 20 mm.

3. The noise reducer according to claim 1, wherein
the vibration damper is made of a vibration damping material.

4. The noise reducer according to claim 3, wherein
the vibration damping material is a rubber.

5. The noise reducer according to claim 3, wherein
the vibration damping material is a foamed plastic.

6. The noise reducer according to claim 3, wherein
the vibration damping material is nonwoven fabric.

7. The noise reducer according to claim 3, wherein
the vibration damping material is an asphalt sheet.

8. The noise reducer according to claim 3, wherein
the pressure plate has a diameter of not less than 200 mm and not more than a wheel rim diameter minus 50 mm.

9. A noise reducer set including a noise reducer for a vehicle wheel and at least one spacer,
said noise reducer comprising: a pressure plate provided with mounting holes and mounted on the outside of the wheel utilizing hub bolts and said mounting holes; and a vibration damper disposed in a periphery zone of the pressure plate so that the vibration damper presses a disk portion of the wheel when the pressure plate is mounted, and
said at least one spacer provided with through holes arranged in the same pattern as the mounting holes.

10. The noise reducer set according to claim 9, wherein
said at least one spacer is a plurality of spacers having different thickness.

11. The noise reducer set according to claim 9 or 10 which further includes special nuts attachable to the hub bolts, each said special nut is made up of a main portion like a cap nut and a concentric bolt portion protruding from the cap thereof.

12. The noise reducer set according to claim 9 or 10 which further includes special nuts each attachable to the hub bolt, each said special nut made up of a main portion like a cap nut and a concentric bolt portion protruding from the cap thereof, and nuts each attachable to the bolt portion.

13. A noise reducer set including a noise reducer for a vehicle wheel and special nuts,
said noise reducer comprising: a pressure plate provided with mounting holes and mounted on the outside of the wheel utilizing hub bolts and said mounting holes; and a vibration damper disposed in a periphery zone of the pressure plate so that the vibration damper presses a disk portion of the wheel when the pressure plate is mounted, and
each said special nut is attachable to the hub bolt and made up of a main portion like a cap nut and a concentric bolt portion protruding from the cap thereof.

14. The noise reducer set according to claim 13 which further includes nuts each attachable to the bolt portion.

15. A combination of a vehicle wheel and a noise reducer,
the vehicle wheel comprising: a rim portion on which a tire is mounted; a hub portion installed on a hub of a vehicle's axle and fixed using hub bolts; and a disk portion extending radially from the rim portion to the rim portion, and
the noise reducer comprising: a pressure plate mounted on the outside of the wheel utilizing said hub bolts; and a vibration damper disposed in a periphery zone of the pressure plate so that the vibration damper presses said disk portion when the pressure plate is mounted.
